# EUROPÄISCHE PATENTSCHRIFT

(11) **EP 1 343 620 B1**
(45) Veröffentlichungstag und Bekanntmachung des Hinweises auf die Patenterteilung: **14.12.2005**
(21) Anmeldenummer: 01990367.3
(22) Anmeldetag: 21.12.2001
(51) Int. Cl.: B29C 45/46

(54) **VERFAHREN ZUM SPRITZGIESSEN VON FORMTEILEN AUS KUNSTSTOFFEN**
METHOD FOR INJECTION MOULDING SHAPED PARTS FROM PLASTICS
PROCEDE DE MOULAGE PAR INJECTION DE PIECES MOULEES EN MATIERE PLASTIQUE

(30) Priorität: 23.12.2000 DE 10065162
(43) Veröffentlichungstag der Anmeldung: 17.09.2003
(73) Patentinhaber: CKT Kunststoffverarbeitungstechnik GmbH Chemnitz, D-09322 Tauscha (DE)
(72) Erfinder: SEIDEL, Franziska, 09130 Chemnitz (DE); BRUNNER, Dietmar, 09130 Chemnitz (DE)
(74) Vertreter: Findeisen, Andreas
(86) Internationale Anmeldenummer: PCT/DE2001/004856
(87) Internationale Veröffentlichungsnummer: WO 2002/051612

(56) Entgegenhaltungen:
- EP-A- 0 141 531
- DE-A- 2 329 023
- DE-A- 2 422 888
- FR-A- 911 357
- US-A- 3 843 293
- US-A- 4 204 827

## Beschreibung

Die Erfindung betrifft ein Verfahren zum Spritzgießen von Formteilen aus Kunststoffen, insbesondere zur Fertigung von Klein- und Mikroteilen mit einer Spritzgießmaschine, die eine Plastifiziereinrichtung und eine Einspritzeinrichtung aufweist.

In der Spritzgießtechnik wird die erreichbare Formteilqualität wesentlich durch die konstruktive Ausgestaltung der Plastifizier- und Einspritzeinrichtung bestimmt. Während sich für konventionelle Anwendungen verschiedenartige Konstruktionen bewährt haben, sind kaum technische Lösungen verfügbar, mit denen eine wirtschaftliche Fertigung sehr kleiner Bauteile in großen Stückzahlen realisiert werden kann. Ein grundlegendes Problem derartiger Anwendungen ist (unabhängig von der ohnehin für Klein- und Mikroteile schwierigen Abstimmung der Plastifizier- und Einspritzparameter wie z.B. Schmelzeverweilzeit, Schußgewicht, Einspritzdruck oder Einspritzgeschwindigkeit) das extrem ungünstige Materialverhältnis zwischen notwendigem Anguß und eigentlichem Bauteil. Oftmals beträgt das Angußvolumen ein Vielfaches des Bauteilvolumens. Der Anguß verursacht demzufolge erhebliche Kosten, indem das "unnötige" Material entweder als Abfall entsorgt oder in zusätzlichen Verfahrensschritten als Recyclat aufbereitet und einer erneuten Nutzung zugeführt werden muss. Weiterhin erhöht sich die notwendige Kühlzeit, so dass sich verlängerte Zykluszeiten ergeben.

Aufgrund dieser Nachteile werden von der kunststoffverarbeitenden Industrie zunehmend technische Lösungen gefordert, mit denen eine weitgehend angußfreie Herstellung von vorzugsweise Klein- und Mikroteilen möglich ist. Zur Realisierung derartiger Forderungen bietet sich zunächst eine Miniaturisierung der Bauteile der Spritzgießmaschine an. Bei Spritzgießmaschinen "klassischer" Bauart, d.h., mit einer Plastifiziereinrichtung, die einen Plastifizierzylinder mit einer rotierenden und axial verschiebbaren Plastifizierschnecke aufweist, sind einer solchen Miniaturisierung jedoch objektive, insbesondere physikalisch bedingte Grenzen gesetzt. Gegenwärtig betragen die praktisch realisierten Durchmesser von Plastifizierschnecken mindestens 14 mm. Somit beträgt das Spritzvolumen bei einem Hub von lediglich 10 mm jedoch bereits 1,5 cm³. Bei einer weiteren Verminderung des Schneckendurchmessers würde der verbleibende Kerndurchmesser zu gering, um eine ausreichende Stabilität der gesamten Baugruppe zu gewährleisten. Das System Schnecke / Zylinder kommt hier auch an physikalisch-technische Grenzen hinsichtlich Einzugsverhalten des konventionellen Granulats, so dass zunehmend neue Granulatformen erforderlich werden.

Eine weitgehend angußfreie Herstellung von Klein- und Mikroteilen ist mit einer Entwicklung der Dr. Boy GmbH "(Schneckenplastifizierung mit Nadeleinspritzung" in "PLASTVERARBEITER", 1999, Heft 6, Seite 34) möglich. Demzufolge werden das Plastifizieren und das Einspritzen verfahrenstechnisch getrennt, indem diese beiden Verfahrensschritte von verschiedenen Baugruppen realisiert werden. Das Plastifizieren erfolgt in an sich bekannter Weise mit einer relativ großen Plastifizierschnecke, die eine optimale Homogenisierung und konstante Förderung gewährleistet. Innerhalb der Plastifizierschnecke ist eine verschiebbare Nadel angeordnet, die als Einspritzkolben wirksam wird. Mit dieser technischen Lösung können sehr kleine Schußgewichte realisiert werden, so dass gegenüber dem Stand der Technik ein wesentlich verbessertes Verhältnis von Spritzgewicht zu Formteilgewicht erzielt wird. Allerdings weisen die sehr kleinen Einspritznadeln auch funktionelle Mängel auf, z.B. bezüglich Dichtigkeit und Verdrängungsvolumen während der Nadelbewegung. Ferner kann die ohnehin geringe Stabilität der Einspritznadel zumindest bei Montage- oder Materialfehlern weitere Probleme ergeben.

Aus DE 198 46 710 A 1 ist ein Verfahren zum Spritzgießen von Mikroformteilen aus thermoplastischen Kunststoffen mit geringer Angußmasse bekannt. Bei dieser technischen Lösung wird auf eine Plastifizierschnecke verzidhtet. Der Kunststoff wird durch Wärmeleitung in einem elektrisch beheizten Zylinder aufbereitet, der folglich die Plastifiziereinrichtung darstellt. Die jeweils benötigten kleinen Schmelzemengen werden in diesem Zylinder mit einem ersten Kolben vordosiert. Danach wird die Schmelze mit einem zweiten Kolben, der eine ähnliche Wirkungsweise hat wie die Einspritznadel der oben beschriebenen Konstruktion der Dr. Boy GmbH, eingespritzt. Nachteilig sind einerseits die zahlreichen Verfahrensschritte. Trotz der aufwendigen Verfahrensdurchführung können andererseits jedoch verschiedene funktionelle Mängel (Dichtigkeit, Verdrängungsvolumen, Stabilität usw.) auftreten, die insbesondere durch die Einspritznadel verursacht werden.

Schließlich beschreiben die Druckschriften US 4,204,827 und US 3,843,293 jeweils ein Verfahren zum Spritzgießen von Formteilen aus Kunststoff, bei dem die Schmelze unter Beaufschlagung mit Druckluft in die Form eingespritzt wird.

Aufgabe der Erfindung ist es, ein Verfahren zum Spritzgießen von insbesondere Klein- und Mikroteilen zu schaffen, bei dem das Einspritzen der Schmelze in die Form ohne Verwendung mechanisch verschiebbarer Baugruppen sowie ohne Druckluft möglich ist.

In Verbindung mit dem Oberbegriff des Patentanspruchs 1 wird diese Aufgabe gelöst, indem die Schmelze unmittelbar durch ein flüssiges Medium in die Form eingespritzt wird, wobei zur Bildung einer Grenzschicht die Temperatur des flüssigen Einspritzmediums beim Einspritzen unterhalb der Schmelzetemperatur des Kunststoffes liegt. Vorteilhafte Ausgestaltungen sind in den Ansprüchen 2 und 3 beschrieben.

Durch den Verzicht auf eine Einspritznadel entfallen die schmalen Übergangsbereiche zwischen der Außenfläche dieser Baugruppe und den zugeordneten Wandbereichen der jeweils benachbarten Abschnitte, in denen sich bevorzugt kleine Materialreste ablagern. Folglich können auch keine Probleme bezüglich mangelnder Dichtigkeit oder Stabilität auftreten, so dass sich letztlich die Funktionssicherheit der gesamten Spritzgießmaschine erhöht. Ein weiterer Vorteil ist die sehr geringe Angußmasse, wobei durch eine besonders sorgfältige Parameterabstimmung eine angußlose Fertigung möglich wird. Dadurch ist eine wesentliche Kühlzeit- und Spritzdruckreduzierung (geringes Fließweg-Wanddickenverhältnis) möglich.

Das vorgeschlagene Verfahren ist für verschiedenartige Spritzgießmaschinen geeignet und erfordert lediglich die konstruktive Ausgestaltung einer entsprechenden Zuführ- und Spritzeinheit. Dies ist grundsätzlich bei sämtlichen Plastifizier- und Einspritzeinrichtungen möglich, unabhängig davon, ob es sich um technische Lösungen mit Plastifizierschnecke, mit Kolben oder mit Scheibenextruder handelt. Beim Spritzen von vorzugsweise Klein- und Mikroteilen können für das Aufschmelzen des Kunststoffes auch beheizbare Kammern, beispielhaft ausgelegt als im Werkzeug integrierte Heißkanaldüsen, verwendet werden. Gegenüber Konstruktionen mit Einspritzkolben bzw. -nadel ergeben sich kaum Probleme für die räumliche Integration des als "Einspritzkolben" wirkenden flüssigen Mediums, weil die hierfür notwendigen Kanäle weitgehend im verfügbaren Bauraum ausgestaltet werden können. Schwierige geometrische Vorgaben (wie z.B. die für eine Einspritznadel benötigte minimale geradlinige Wegstrecke) müssen nicht beachtet werden.

In der Zeichnung sind mehrere Konstruktionen dargestellt, mit denen das erfindungsgemäße Verfahren durchgeführt werden kann. Es zeigen, jeweils als Bestandteil einer Spritzgießmaschine:
- Fig. 1: eine Ausgestaltung einer Plastifiziereinrichtung mit Plastifizierschnecke
- Fig. 2: eine Plastifiziereinrichtung mit Kolbenplastifizierung
- Fig. 3: eine Plastifiziereinrichtung mit Scheibenplastifizierung

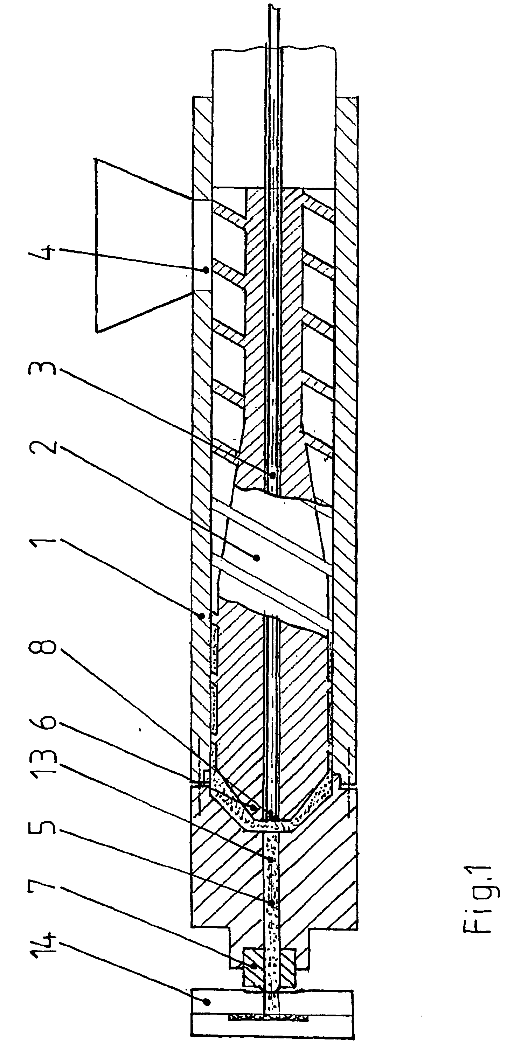

Die Ausführung gemäß Fig. 1 umfaßt einen Plastifizierzylinder 1, in dem eine Plastifizierschnecke 2 angeordnet ist. Innerhalb der Plastifizierschnecke 2 ist eine Axialbohrung 3 ausgestaltet. Die Zuführung der Werkstoffkomponenten erfolgt über eine Materialeintrittsöffnung 4 in den Plastifizierzylinder 1. Durch die Rotationsbewegung der Plastifizierschnecke 2 wird das Kunststoffmaterial in Richtung eines Sammelraumes 5 gefördert. Der Sammelraum 5 ist vor der Schneckenspitze 6 angeordnet, er kann jedoch auch in der Axialbohrung 3 der Schnecke 2 oder in einer speziell ausgestalteten Verschlußdüse 7 angeordnet sein.

Vor Beginn des Einspritzvorgangs wird ein definierter Einspritzraum geschaffen, der folglich die Einspritzverhältnisse definiert, indem die Plastifizierschnecke 2 mit der Schneckenspitze 6 an die Dichtkante des Sammelraumes 5 angelegt wird. Die konkrete Konstruktion der Plastifizierschnecke 2 und ihrer Schneckenspitze 6 ist hierbei unerheblich. Nachdem die Schneckenspitze 6 an der Dichtkante des Sammelraumes 5 anliegt, strömt das flüssige Medium, das zum Einspritzen der Schmelze in das Werkzeug 14 genutzt wird, über eine gesteuerte Düse 8 durch die Axialbohrung 3 der Plastifizierschnecke 2 und beaufschlagt die Schmelze mit dem erforderlichen Spritzdruck. Demzufolge wirkt das die Schmelze 13 beaufschlagende Medium funktionell als Einspritzkolben. Das einzuspritzende Volumen der Schmelze wird über eine separate Steuerung von Druck und Geschwindigkeit des Gases geregelt.

Die Temperatur des Einspritzmediums beim Einspritzen liegt unterhalb der Schmelzetemperatur des Kunststoffes. Durch die Kühlwirkung des Einspritzmediums wird demzufolge an der Grenzfläche durch Erstarren des Kunststoffes eine feste Haut gebildet, die beim Einspritzen die Funktion einer Kolbenfläche realisiert. Nach Beendigung des Einspritzvorganges wird diese Grenzschicht durch Wärmeübertragung wieder in Schmelze überführt.

Weiterhin ist es im Rahmen der Erfindung möglich, als Druckübertragungsmittel zwischen Kunststoffschmelze 13 und Einspritzmedium anstelle der Düse 8 eine Membran anzuordnen. Dafür ist z.B. eine, in der Zeichnung allerdings nicht näher dargestellte Schlappmembran geeignet. Durch eine solche Membran werden chemische Reaktionen zwischen Einspritzmedium und Schmelze 13 verhindert.

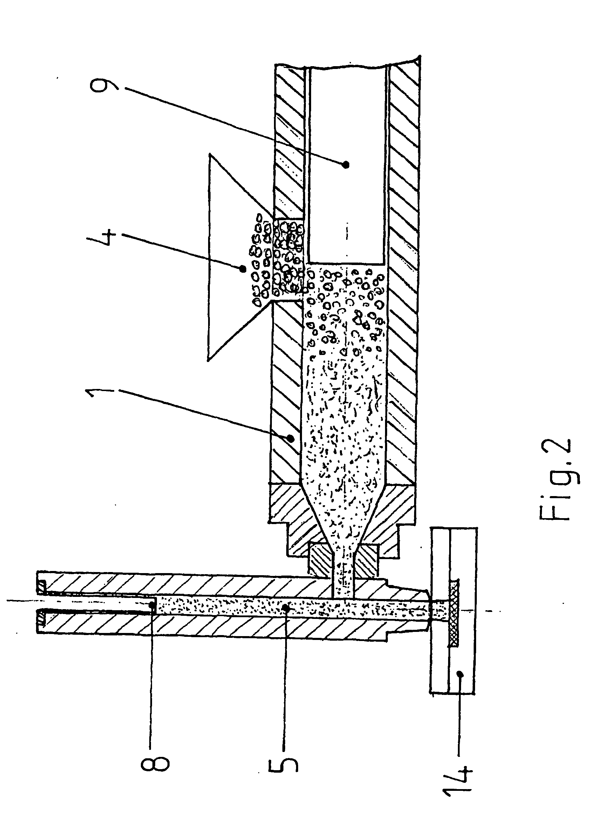

Anstelle einer Plastifizierschnecke 2 kann auch eine sog. Kolbenplastifizierung vorgesehen werden, die in Fig. 2 dargestellt ist. Dabei gelangt das Material über die Materialeintrittsöffnung 4 in den beheizten Plastifizierzylinder 1, wird dort aufgeschmolzen und durch den Kolben 9 in einem Sammelraum 5 vordosiert. Vom Sammelraum 5 wird die Schmelze mittels des flüssigen Mediums, das auch bei dieser Anwendung als Einspritzkolben wirkt, in das Werkzeug 14 gespritzt. Durch Verschieben der Düse 8 (ist in der Zeichnung nicht näher dargestellt) kann die Menge der Schmelze so dosiert werden, dass die Teile angußlos gespritzt werden. Die anhand von Fig. 1 beschriebenen Ausgestaltungen bezüglich der Verfahrensdurchführung können auch bei dieser Konstruktion realisiert werden.

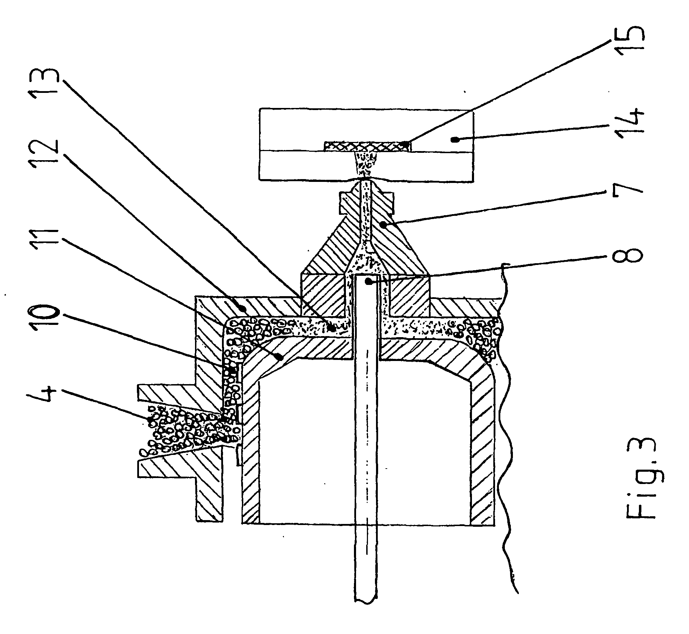

Da für den Miniaturspritzguss geringe nutzbare Plastifiziermengen erforderlich sind, können alternative Plastifiziereinrichtungen eingesetzt werden, mit denen eine kurze kompakte Bauweise möglich wird. Demzufolge kann das erfindungsgemäße Verfahren auch mit beheizbaren Kammern, beispielhaft ausgelegt als im Werkzeug integrierte Heißkanaldüsen oder mittels Scheibenplastifizierung durchgeführt werden. Eine hierfür geeignete Vorrichtung ist aus Fig. 3 ersichtlich. Demgemäß gelangt das Material über die Materialeintrittsöffnung 4 in die Feststoffförderzone 10. Hier wird das Material durch äußere Beheizung vorgewärmt, verdichtet und entgast. Infolge der Relativbewegung zwischen der rotierenden Scheibe 11 und der feststehenden Scheibe 12 erfolgt durch Teilchendeformation die Umwandlung der mechanischen Energie in Wärme und dadurch die Bildung der Schmelze 13. In der Schmelzezone bilden sich durch das viskoelastische Verhalten der Kunststoffschmelze Normalspannungen (Weissenberg-Effekt) aus, die einen zum Zentrum gerichteten Druck in der Schmelze 13 erzeugen und deren Transport in die Spritzdüse 7 bewirken. Auch bei dieser Konstruktion wird über eine gesteuerte Düse 8 das erforderliche Schußgewicht in das mit der Spritzdüse 7 gekoppelte Werkzeug 14 eingespritzt. Im Werkzeug 14 bildet sich ein Spritzling 15 aus, der vorzugsweise ein Klein- oder Mikroteil ist und nahezu keinen Anguß aufweist.

### Aufstellung der Bezugszeichen

- 1: Plastifizierzylinder
- 2: Plastifizierschnecke
- 3: Axialbohrung
- 4: Materialeintrittsöffnung
- 5: Sammelraum
- 6: Schneckenspitze
- 7: Spritzdüse
- 8: Düse
- 9: Kolben
- 10: Feststoffförderzone
- 11: rotierende Scheibe
- 12: feststehende Scheibe
- 13: Schmelze
- 14: Werkzeug / Form
- 15: Spritzling

## Patentansprüche

1. Verfahren zum Spritzgießen von Formteilen aus Kunststoffen, insbesondere zur Fertigung von Klein- und Mikroteilen mit einer Spritzgießmaschine, die eine Plastifiziereinrichtung und eine Einspritzeinrichtung aufweist,
**dadurch gekennzeichnet,**
**dass** die Schmelze unmittelbar durch ein flüssiges Medium in die Form eingespritzt wird, wobei zur Bildung einer Grenzschicht die Temperatur des flüssigen Einspritzmediums beim Einspritzen unterhalb der Schmelzetemperatur des Kunststoffes liegt.

2. Verfahren nach Anspruch 1,
**dadurch gekennzeichnet,**
**dass** nach Beendigung des Einspritzvorganges die Grenzschicht durch Wärmeübertragung wieder in Schmelze überführt wird.

3. Verfahren nach Anspruch 1,
**dadurch gekennzeichnet,**
**dass** als Druckübertragungsmittel zwischen Kunststoffschmelze und Einspritzmedium eine Membran, vorzugsweise eine Schlappmembran, verwendet wird.

## Claims

1. A method for injection moulding of moulded parts made of plastic materials, in particular, for the manufacture of small parts and micro parts, where an injection moulding machine is used equipped with both a plasticizing unit and an injection unit,
**characterized in**
**that** the melt is directly injected into the mould using a liquid medium wherein during injection for the formation of a boundary layer the temperature of the liquid injection medium is below the melt temperature of the plastic material.

2. The method according to Claim 1,
**characterized in**
**that** after completion of injection the boundary layer is converted by way of heat transfer into melt again.

3. The method according to Claim 1
**characterized in**
**in that** a diaphragm, preferably a slack diaphragm, is used as medium of pressure transfer between the plastic melt and the injection medium.

## Revendications

1. Procédé pour le moulage par injection de pièces en matière plastique, notamment lors de la fabrication de pièces petites ou microscopiques à l'aide d'une machine à injecter qui, elle, est munie tant d'un dispositif de plastification que d'un dispositif d'injection,
**caractérisé par le fait**
**que** la matière fondue est directement injectée dans le moule où, pour assurer la formation d'une couche limite, la température du fluide d'injection est inférieure à celle de fusion de la matière plastique durant l'opération d'injection.

2. Procédé suivant la revendication 1,
**caractérisé par le fait**
**qu'**au terme de l'opération d'injection, la couche limite est retransformée par transmission calorifique en matière fondue.

3. Procédé suivant la revendication 1,
**caractérisé par le fait**
**qu'**un diaphragme, de préférence une membrane molle, est utilisée pour effectuer la transmission de pression entre la matière fondue et le fluide d'injection.
